# EUROPEAN PATENT SPECIFICATION

(11) **EP 2 975 807 B1**
(45) Date of publication and mention of the grant of the patent: **27.03.2019**
(21) Application number: 13877653.9
(22) Date of filing: 18.09.2013
(51) Int. Cl.: H04L 12/715, H04L 12/24, H04L 12/64, H04L 29/08, H04L 29/12

(54) **METHOD AND APPARATUS FOR DISCOVERING OPENFLOW PROTOCOL-BASED CONTROL PLANE DEVICE**
VERFAHREN UND VORRICHTUNG ZUR ENTDECKUNG EINER OPENFLOW-PROTOKOLLBASIERTEN VORRICHTUNG AUF STEUERUNGSEBENE
PROCÉDÉ ET APPAREIL POUR DÉCOUVRIR UN DISPOSITIF DE PLAN DE COMMANDE BASÉ SUR UN PROTOCOLE OPENFLOW

(30) Priority: 15.03.2013 CN 201310082998
(43) Date of publication of application: 20.01.2016
(73) Proprietor: ZTE Corporation, 518057 Shenzhen City, Guangdong Province (CN)
(72) Inventor: LIANG, Qiandeng, Shenzhen Guangdong Province 518057 (CN); SHI, Lei, Shenzhen Guangdong Province 518057 (CN); YI, Jian, Shenzhen Guangdong Province 518057 (CN)
(74) Representative: Novagraaf Technologies
(86) International application number: PCT/CN2013/083803
(87) International publication number: WO 2014/139276

(56) References cited:
- WO-A1-2012/137646
- CN-A- 102 594 697
- CN-A- 102 594 697
- CN-A- 102 938 794
- CN-A- 103 209 121
- ALISA DEVLIC ET AL: "A Use-Case Based Analysis of Network Management Functions in the ONF SDN Model", SOFTWARE DEFINED NETWORKING (EWSDN), 2012 EUROPEAN WORKSHOP ON, IEEE, 25 October 2012 (2012-10-25), pages 85-90, XP032283475, DOI: 10.1109/EWSDN.2012.11 ISBN: 978-1-4673-4554-5
- OPEN NETWORKING FOUNDATION: "OpenFlow Management and Configuration Protocol (OF-Config 1.1)", INTERNET CITATION, 25 June 2012 (2012-06-25), pages I-II, XP002719423, Retrieved from the Internet: URL:https://www.opennetworking.org/images/ stories/downloads/sdn-resources/onf-specif ications/openflow-config/of-config-1.1.pdf [retrieved on 2014-01-29]

## Description

### Technical Field

The present disclosure relates to the field of communications, and in particular to a method and an apparatus for discovering an OpenFlow (OF) protocol-based control-plane device.

### Background

Software Defined Network (SDN) is a new network architecture, of which the design idea is to separate the control plane of the network from the data forwarding plane of the network and to realize programmable control. Generally, the architecture of the SDN is abstracted as three layers: the first layer is a forwarding entity, including all software and hardware components implementing the forwarding function; the second layer is an entity used for managing and controlling the forwarding entity of the first layer; and the third layer is applications and services based on the former two layers of basic networks. The interface between the former two layers is called a south interface of the SDN. At present, the OpenFlow protocol is a mainstream protocol of the south interface, which, based on a flow table, controls a fine-granularity forwarding table and its behaviour, and has a very strong expression capability and adaptability.

The OpenFlow protocol is a switch technology, which first was proposed by Stanford University and aims at solving various defects in existing networks by an innovative internetworking idea on the basis of the existing Transfer Control Protocol (TCP)/lnternet Protocol (IP) technical conditions. The main idea of the OpenFlow protocol is to evolve the data packet forwarding process controlled by a switch/router to processes separately completed by an OpenFlow forwarding-plane device (for example, OpenFlow Switch, also including other forwarding-plane devices supporting OpenFlow/OpenFlow-Config protocol and flow table mechanism, for example, Access Point (AP) and router) and a control server (for example, OpenFlow Controller), thereby separating data forwarding and route control. In a conventional network, the flowing direction of data packets is specified manually; although both switch and router have a control right, there is no concept of data flow, thus only data packet level of switching is enabled. However, in an OpenFlow network, a control server (e.g., OpenFlow controller) replaces a router; and an OpenFlow controller determines the transfer path of all data packets in the network through a predetermined interface operation, thereby achieving the purpose of controlling data forwarding.

The OpenFlow protocol runs on a Transport Layer Security Protocol (TLS) and an unprotected TCP connection. If an OpenFlow forwarding-plane device finds a data packet with no transfer path specified while forwarding the data packet, the OpenFlow forwarding-plane device sends a query message to an OpenFlow controller that has established a connection with the OpenFlow forwarding-plane device, for the controller to determine the transfer path of the data packet. In this way, the OpenFlow forwarding-plane device and the OpenFlow controller should establish a connection between each other before the OpenFlow forwarding-plane device forwards a message.

OpenFlow-Config protocol is separated from the OpenFlow protocol since version 1.3, which takes out the function of configuration and management on forwarding-plane devices of the SDN to form a separate channel; and the OpenFlow-Config protocol can run on TCP protocol, Secure Socket Layer (SSL) protocol, User Data Protocol (UDP) or Datagram Transport Layer Security (DTLS) protocol and the like. When an OpenFlow configuration point device configures an OpenFlow forwarding-plane device, the OpenFlow configuration point device can configure the address of an OpenFlow controller for the OpenFlow forwarding-plane device; however, this process requires the OpenFlow forwarding-plane device to be able to dynamically discover the OpenFlow-Config management configuration point effectively.

At present, the OpenFlow protocol family has not defined a corresponding discovery mechanism. The OpenFlow forwarding-plane device can discover an OpenFlow control-plane device (including OpenFlow controller or OpenFlow configuration point device) through a static configuration only. However, this method is not good enough for the mechanism of the OpenFlow forwarding-plane device discovering an OpenFlow control-plane device, and is not convenient to run and maintain a large-scale OpenFlow network, for example, in a large-scale OpenFlow network, an administrator needs to plan the corresponding relationship of a control-plane device managing and controlling a forwarding-plane device and needs to configure on lots of forwarding-plane devices the address information of the corresponding control-plane device. Once a control-plane device has a fault, the forwarding-plane devices cannot perform an auto-adaptive adjustment to access a new control-plane device. Moreover, in an application condition that different services are deployed according to different physical devices or different devices from different manufactures are managed in domains, the configuration is more complex.

CN 102594697 A1 discloses a method and apparatus for balancing load.

In view of the above problem in the related art, no solution has been put forward so far.

### Summary

In view of the above problem in related art that there is no solution to enable a forwarding-plane device to automatically discover a control-plane device, the embodiments of the present disclosure provide a method and an apparatus for discovering an OpenFlow protocol-based control-plane device, to at least solve the above problem.

According to an embodiment of the present disclosure, a method for discovering an OpenFlow protocol-based control-plane device is provided, including: receiving identification information from an OpenFlow protocol-based forwarding-plane device, wherein the identification information is identification information of the forwarding-plane device, and the identification information corresponds to information of at least one control-plane device stored in a Management Information Base (MIB); performing matching in the MIB according to the identification information to obtain the information of the at least one control-plane device; and sending the information of the at least one control-plane device to the forwarding-plane device.

In an example embodiment, before receiving the identification information, the method further includes: acquiring information of each control-plane device in a specified domain after domain partitioning is conducted in advance in an SDN; storing the information of each control-plane device in the specified domain into the MIB.

In an example embodiment, the identification information includes: domain name information of the specified domain to which the forwarding-plane device belongs.

In an example embodiment, the method applies to a Dynamic Host Configuration Protocol (DHCP) device in an SDN.

In an example embodiment, sending the information of the at least one control-plane device to the forwarding-plane device includes: sending the information of the at least one control-plane device to the forwarding-plane device through a specified field in a DHCP message.

In an example embodiment, the specified field includes: an Option field.

In an example embodiment, when receiving identification information from the OpenFlow protocol-based forwarding-plane device, the method further includes: receiving a request message from the forwarding-plane device, wherein the request message is used for requesting a DHCP device to assign an address to the forwarding-plane device.

In an example embodiment, the method further includes: receiving a query request message from a Network Management System (NMS); upon trigger of the query request message, sending, through the NMS, information of control-plane devices stored in the MIB to DHCP devices other than the DHCP device in the SDN.

According to another embodiment of the present disclosure, an apparatus for discovering an OpenFlow protocol-based control-plane device is provided, including: a receiving component, which is configured to receive identification information from an OpenFlow protocol-based forwarding-plane device, wherein the identification information is identification information of the forwarding-plane device, and the identification information corresponds to information of at least one control-plane device stored in an MIB; a matching component, which is configured to perform matching in the MIB according to the identification information to obtain the information of the at least one control-plane device; and a sending component, which is configured to send the information of the at least one control-plane device to the forwarding-plane device.

In an example embodiment, the apparatus includes: an acquisition component, which is configured to acquire the information of each control-plane device in a specified domain after domain partitioning is conducted in advance in an SDN; and a storage component, which is configured to store the information of each control-plane device in the specified domain into the MIB.

With the embodiments of the present disclosure, the information of at least one control-plane device is obtained by performing matching according to the identification information of a forwarding-plane device and the information of the at least one control-plane device is sent to the forwarding-plane device, thus, the embodiments of the present disclosure solve the technical problem in related art that a forwarding-plane device cannot discover a control-plane device automatically and effectively, and thus enables the forwarding-plane device to automatically discover the control-plane device and further perform auto-adaptive adjustment for the control-plane device.

### Brief Description of the Drawings

For a better understanding of the present disclosure, accompanying drawings described hereinafter are provided to constitute one part of the application; the schematic embodiments of the present disclosure and the description thereof are used to illustrate the present disclosure but to limit the present disclosure improperly. In the accompanying drawings:
Fig. 1 shows a flowchart of a method for discovering an OpenFlow protocol-based control-plane device according to Embodiment 1 of the present disclosure;
Fig. 2 shows a structure diagram of an apparatus for discovering an OpenFlow protocol-based control-plane device according to Embodiment 1 of the present disclosure;
Fig. 3 shows another structure diagram of an apparatus for discovering an OpenFlow protocol-based control-plane device according to Embodiment 1 of the present disclosure;
Fig. 4 shows a flowchart of discovering an OpenFlow control-plane device automatically in an SDN network according to Embodiment 2 of the present disclosure;
Fig. 5 shows a flowchart of discovering an OpenFlow control-plane device automatically in an SDN network according to Embodiment 3 of the present disclosure;
Fig. 6 shows a flowchart of discovering an OpenFlow control-plane device automatically in an SDN network according to Embodiment 4 of the present disclosure;
Fig. 7 shows a flowchart of discovering an OpenFlow control-plane device automatically in an SDN network according to Embodiment 5 of the present disclosure;
Fig. 8 shows a diagram of an extended Option A through which an OpenFlow device reports the device information according to the embodiment of the present disclosure;
Fig. 9 shows a diagram of an extended OptionB1 through which DHCPv4 transmits the information of an OpenFlow control-plane device to a forwarding-plane device according to the embodiment of the present disclosure; and
Fig. 10 shows a diagram of an extended OptionB2 through which DHCPv6 transmits the information of an OpenFlow control-plane device to a forwarding-plane device according to the embodiment of the present disclosure.

### Detailed Description of the Embodiments

The present disclosure is described below in detail by reference to the accompanying drawings in conjunction with embodiments. It should be noted that the embodiments in the application and the characteristics of the embodiments can be combined if no conflict is caused.

### Embodiment 1

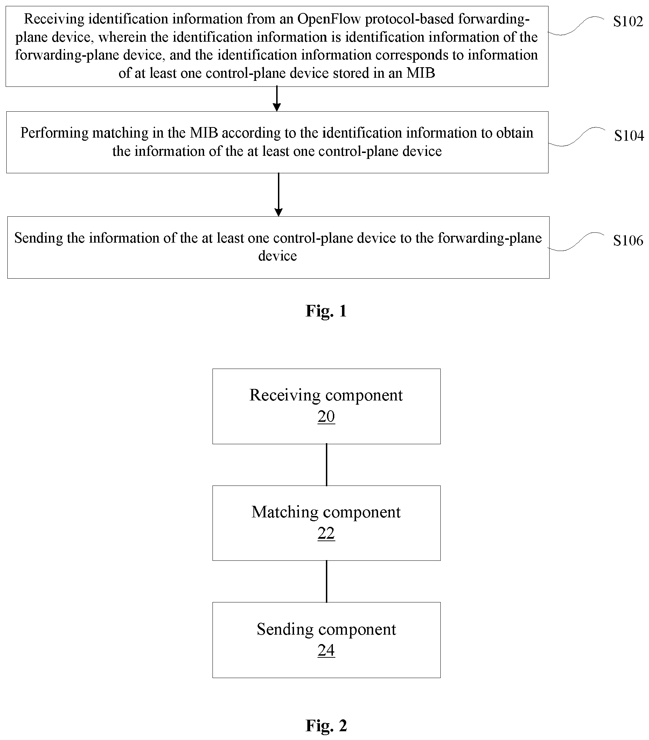

Fig. 1 shows a flowchart of a method for discovering an OpenFlow protocol-based control-plane device according to Embodiment 1 of the present disclosure. As shown in Fig. 1, the method includes S102 to S106 described in detail as follows.

S102: identification information is received from an OpenFlow protocol-based forwarding-plane device, wherein the identification information is identification information of the forwarding-plane device, and the identification information corresponds to information of at least one control-plane device stored in a management information base (MIB).

S104: matching is performed in the MIB according to the identification information to obtain the information of the at least one control-plane device.

S106: the information of the at least one control-plane device is sent to the forwarding-plane device.

Through the above steps, automatic matching is conducted according to the identification information of the forwarding-plane device corresponding to the information of at least one control-plane device to obtain the information of the at least one control-plane device and the information of the at least one control-plane device is sent to the forwarding-plane device. This technical solution replaces the method to discover the OpenFlow control-plane device through a static configuration, thus, the forwarding-plane device can discover the control-plane device automatically.

In this embodiment, in order to manage control-plane devices conveniently, the information of the control-plane devices can be managed in domains. Specifically, before the identification information is received, the information of each control-plane device in a specified domain in an SDN is acquired after domain portioning is carried out, and the information of each control-plane device in the specified domain is stored into an MIB.

When managing the information of the control-plane devices in domains, the identification information might include but not limited to: domain name information of the specified domain to which the forwarding-plane device belongs.

In this embodiment, the above method might apply to but not limited to be applied to network devices in an SDN. In such a case, the information of the at least one control-plane device may be sent to the forwarding-plane device through a specified field in a DHCP message, wherein the specified field includes but not limited to an Option field.

In this embodiment, while the identification information is received from an OpenFlow protocol-based forwarding-plane device, a request message may be received from the forwarding-plane device, wherein the request message is used for requesting a DHCP (including DHCPv4 and DHCPv6) device to assign an address to the forwarding-plane device.

In this embodiment, in order to realize the discovery mechanism of the cross-DHCP device management network, a query request message from an NMS may be received; upon trigger of the query request message, information of control-plane devices stored in the MIB is sent, through the NMS, to DHCP devices other than the above DHCP device in the SDN.

An apparatus for discovering an OpenFlow protocol-based control-plane device is provided in this embodiment to implement the above embodiment and example embodiment. For those described above, no further description is needed. Hereinafter components involved in the apparatus are described. The term "component" used below can realize a combination of software and/or hardware with preset functions. Although the apparatus described in the following embodiment preferably is realized in the form of software, it is possible to realize it in the form of hardware or the combination of software and hardware. Fig. 2 shows a structure diagram of an apparatus for discovering an OpenFlow protocol-based control-plane device according to Embodiment 1 of the present disclosure. As shown in Fig. 2, the apparatus includes:
a receiving component 20, which is coupled with a matching component 22 and is configured to receive identification information from an OpenFlow protocol-based forwarding-plane device, wherein the identification information is identification information of the forwarding-plane device, and the identification information corresponds to information of at least one control-plane device stored in an MIB;
a matching component 22, which is coupled with a sending component 24 and is configured to perform matching in the MIB according to the identification information to obtain the information of the at least one control-plane device; and
a sending component 24, which is configured to send the information of the at least one control-plane device to the forwarding-plane device.

Through the functions realized by the above components, it is possible to realize the automatic discovery of a control-plane device by a forwarding-plane device.

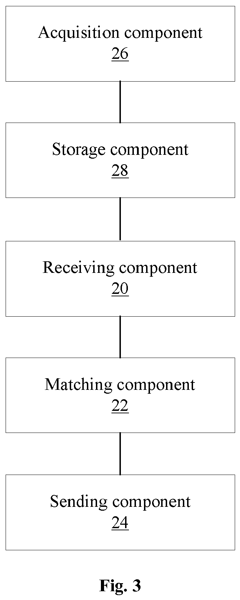

In this embodiment, as shown in Fig. 3, the apparatus may also include the following components: an acquisition component 26, which is coupled with a storage component 28 and is configured to acquire information of each control-plane device in a specified domain after domain partitioning is conducted in advance in an SDN; and a storage component 28, which is configured to store the information of each control-plane device in the specified domain into the MIB.

In order to further understand the above embodiment, a detail description is provided below in conjunction with Embodiment 2 to Embodiment 5. In the following content, DHCP takes DHCPv4 for example; of course, DHCP is not limited to DHCPv4, but might also be DHCPv6.

### Embodiment 2

This embodiment provides a method for automatically discovering an OpenFlow control-plane device in an SDN, which can simplify the network configuration of the OpenFlow, improve the mechanism of the forwarding-plane device of the OpenFlow network discovering a control-plane device, and improve the intelligence and the maintainability of the OpenFlow network.

The main idea of this embodiment lies in that a control-plane DHCP device of the SDN network automatically learns the OpenFlow control-plane devices in the DHCP management domain by means of the DHCP interaction process, and the result of the automatic learning is stored into a locally maintained MIB, so as to manage these OpenFlow control-plane devices in domains. When an OpenFlow forwarding-plane device applies for an IP address from a DHCP server, the DHCP device matches items stored in the local MIB according to the domain name information contained in an Option reported by an OpenFlow forwarding-plane device and notifies the match result (information list of available OpenFlow control-plane devices in the same management domain in the SDN) to the OpenFlow forwarding-plane device through the Option item in a DHCP message, so that the OpenFlow forwarding-plane device can select a proper OpenFlow control-plane device according to its own need and establish a connection with the selected OpenFlow control-plane device, thereby realizing the function of the OpenFlow forwarding-plane device automatically discovering an OpenFlow control-plane device.

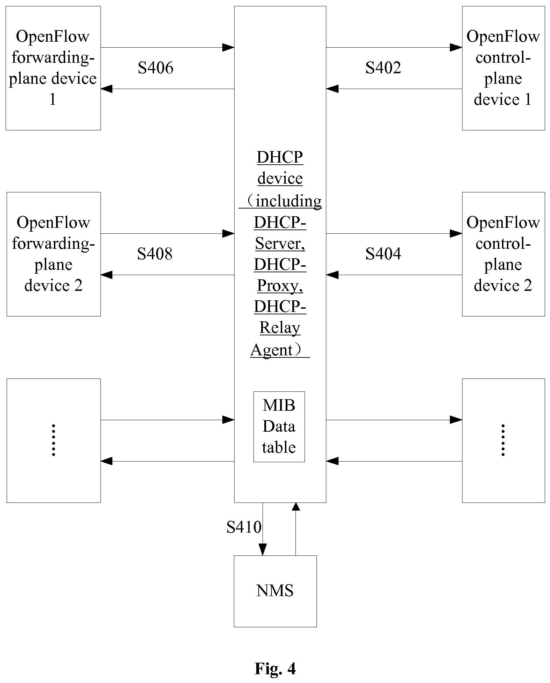

As shown in Fig. 4, the DHCP device provides, manages and maintains an MIB data table, wherein the data table of the MIB is mainly used for managing the information of devices such as OpenFlow forwarding-plane devices, OpenFlow controllers and OpenFlow configuration points in the OpenFlow network. The MIB table may be modified locally through an instruction, may also be remotely modified through an NMS or may be modified by way of automatic learning triggered by a DHCP protocol module. The fields of the items in the MIB table are suggested to include device role, device address, domain name, unique device identification, device management load, information source and the like.

Each field of the MIB data table is illustrated as follows.

Device role: which tells if the device is an OpenFlow forwarding-plane device (e.g., indicated by 0), an OpenFlow controller (e.g., indicated by 1) or an OpenFlow configuration point (e.g., indicated by 2).

Device address (IP address): which is the IP address of the OpenFlow device used for connection establishment at a south interface, wherein the IP address may be an IPv4 address or an IPv6 address.

Domain name: which indicates a management domain to which the OpenFlow device belongs; when the domain name character string is empty, a default name is used. SDN network administrators may plan the management domains of the network according to device manufacturers, service types or virtual operators, and manage different devices in the network in different domains. The domain name may be configured statically when a device leaves factory, or configured by a local management interface instruction, or configured and modified dynamically by an OpenFlow control-plane device after accessing a management network.

Unique device identification: which represents a global unique identification of the device, wherein the identification is suggested to adopt a character string of a specified coding format.

Device management load: which is valid for an OpenFlow control-plane device only, indicating the index data of device management load, wherein the device management load might be a percentage of the number of full-load connections to the total number of OpenFlow connections or other indexes. These index data may be dynamically updated by these OpenFlow control-plane devices. The OpenFlow forwarding-plane device preferably selects a control-plane device with lower load to establish a connection in the condition that there is no priority suggestion.

Information source: which indicates the reason for generating one data table record, for example, NMS remote configuration, local configuration and automatic learning. These three generation reasons may be provided with certain priorities, for example, the local configuration is prior to the NMS remote configuration, and the NMS remote configuration is prior to automatic learning; of course, this priority relationship may be configured. Generally, the data table record of one generation reason can be deleted by a deletion action triggered by the same information source only, unless this data table record is replaced by a higher-priority data table record of the same device.

The MIB data table may be queried by an NMS, and after the NMS acquires the records automatically learned by the MIB data table of the DHCP device, the NMS may send these records to other DHCP devices in the SDN, to realize the discovery mechanism of the cross-DHCP device management network. From the above it can be seen that the DHCP device in this solution does not execute or serve as an agent for the action of address allocation only, but also performs uniform management on the SDN network devices within its management scope; therefore, this type of device which can process DHCP messages and execute management of network node information might also be some gateway devices, including Broadband Network Gateway (BNG) and the like.

Steps involved in the Embodiment 2, that is, the steps in Fig. 4, are described below in further detail.

S402: after an OpenFlow control-plane device 1 is started, the OpenFlow control-plane device 1 reports information, such as the device role and domain name Domain 1, through an extended Option A carried in a DHCP Discover message in the DHCP protocol; if the OpenFlow control-plane device 1 does not need to acquire an address through DHCP, the existing address of the OpenFlow control-plane device 1 may also be carried together; essentially, the OpenFlow control-plane device 1 just reports its own device information to a DHCP device through a DHCP message to form a corresponding data table item in the MIB. After the DHCP device replies to the DHCP request, the DHCP device adds one device information record to the MIB data table; and the subsequent load change of the OpenFlow control-plane device 1 can be dynamically updated to the DHCP device's MIB data table by advanced renewal or through an Option A carried in a special DHCP message. When the OpenFlow control-plane device 1 releases its address, the extended Option A is carried in a DHCP Release message; and the DHCP device deletes the corresponding device record from the local MIB information table.

S404: after an OpenFlow control-plane device 2 is started, the OpenFlow control-plane device 2 reports information, such as the device role and domain name Domain 2, through an extended Option A carried in a DHCP Discover message in the DHCP protocol. The DHCP device adds one new device information record to the MIB data table by the same method as described in S402. When the OpenFlow control-plane device 2 releases its address, the extended Option A is carried in a DHCP Release message; and the DHCP device deletes the corresponding device record from the local MIB information table.

S406: after an OpenFlow forwarding-plane device 1 is started normally, the OpenFlow forwarding-plane device 1 reports the domain name Domain 1 through an Option A carried in a DHCP Discover message in the DHCP protocol and acquires an IP address; while the DHCP device notifies the assigned address to the OpenFlow forwarding-plane device 1, the DHCP device transmits, by carrying a special Option B, the information list of the OpenFlow control-plane devices matched with Domain 1 recorded in the MIB data table to the OpenFlow forwarding-plane device 1, thereby enabling the OpenFlow forwarding-plane device 1 to discover the OpenFlow control-plane device 1. The OpenFlow forwarding-plane device 1 starts to attempt to establish a connection with the OpenFlow control-plane device 1. When the OpenFlow forwarding-plane device 1 releases its address, the extended Option A is carried in a DHCP Release message; and the DHCP device deletes the corresponding device record from the local MIB information table.

S408: after an OpenFlow forwarding-plane device 2 is started normally, the OpenFlow forwarding-plane device 2 reports the domain name Domain 2 through an Option carried in a DHCP Discover message in the DHCP protocol and acquires an IP address; then the OpenFlow forwarding-plane device 2 discovers the OpenFlow control-plane device 2 by the same method as described in S406, and starts to attempt to establish a connection with the OpenFlow control-plane device 2. When the OpenFlow forwarding-plane device 2 releases its address, the extended Option A is carried in a DHCP Release message; and the DHCP device deletes the corresponding device record from the local MIB information table.

S410: an NMS device queries from the DHCP device about the MIB data table, and acquires the OpenFlow device information learned by the DHCP device, and selectively transmits the acquired OpenFlow control device information to other DHCP devices according to the policy configured by the NMS. Of course, the DHCP device may be also allowed to actively report or change its learned MIB data table record through a specific interface.

There is no strict order for the above five steps, any step might occur first. For example, the OpenFlow forwarding-plane device probably does not discover any OpenFlow control-plane device from the DHCP device when first applying for an address, then the OpenFlow forwarding-plane device might select another discovery method (for example, multi-cast detection, local static configuration) to discover an OpenFlow control-plane device in a broadcast domain, or might wait for a certain period of time to try again to discover an OpenFlow control-plane device from the DHCP device.

When the DHCP device transmits the information list of OpenFlow control-plane devices in the same management domain to the OpenFlow forwarding-plane device through the Option B, the order of the OpenFlow control-plane devices in the list might be used to indicate the priority. If there are multiple OpenFlow control-plane devices, the OpenFlow forwarding-plane device may send a connection establishment request to these OpenFlow control-plane devices in turn, until the OpenFlow forwarding-plane device successfully establishes a connection with a certain proper OpenFlow control-plane device.

A management interface (which is used for initiating a DHCP interaction process and establishing a connection with an OpenFlow control-plane device after discovering the OpenFlow control-plane device) and a forwarding interface of the OpenFlow forwarding-plane device should be distinguished. Specifically, the management interface supports the processing of DHCP/TCP/SSL/OpenFlow and other protocols, without needing a flow table or a default flow table; while the forwarding interface does not need to support these protocols before an OpenFlow control-plane device is configured. The distinguishing might be a difference in software or firmware, or might be a difference in the selection of device deployment and local configuration.

The above solution in this embodiment provides a possibility for the OpenFlow forwarding-plane device to automatically discover an OpenFlow control-plane device, thereby making the deployment of the OpenFlow forwarding-plane device and OpenFlow control-plane device smarter in an SDN.

For a better understanding of the above Embodiments 1 and 2, a detailed description is provided below in conjunction with Embodiments 3 to 5.

In the solution provided in the following Embodiments 3 to 5 to automatically discover an OpenFlow control-plane device in an SDN, an OpenFlow forwarding-plane device automatically discovers an OpenFlow control-plane device by means of an interaction of DHCP message with a DHCP device. This solution can provide a better service in a network in which the OpenFlow control-plane device is deployed relatively stably.

The following Embodiments 3 to 5 can be realized based on the following design idea: in an SDN, an OpenFlow forwarding-plane device can dynamically discover an OpenFlow control-plane device through a DHCPv4/DHCPv6 device. Similar to DHCPv4, the OpenFlow control-plane device can report its device management information to a DHCPv6 device through a DHCPv6 Solicit message; during a process of the OpenFlow forwarding-plane device applying for an address, the DHCPv6 device can transmit, through a DHCPv6 Advertise or DHCPv6 Reply message, to the OpenFlow forwarding-plane device the information of OpenFlow control-plane devices in the corresponding management domain to which the OpenFlow forwarding-plane device belongs. In addition, the information of the SDN network devices learned through the DHCP process on the DHCP device are able to be be deleted under the triggering of the DHCP Release messages sent from these devices.

### Embodiment 3

This embodiment mainly describes the process of an OpenFlow forwarding-plane device discovering an OpenFlow control-plane device through a DHCP server and normally establishing a connection with the OpenFlow control-plane device in a scenario that the OpenFlow controller and the OpenFlow configuration point are not separated. For a convenient description, as one example only, this embodiment adopts the DHCPv4 protocol for the description of the dynamic discovery process. The DHCP device is a DHCP Server, the OpenFlow control-plane device is an OpenFlow Controller, and the OpenFlow forwarding-plane device is an OpenFlow Switch. In this embodiment, there is no separate OpenFlow Configuration Point device, and the OpenFlow Controller performs the configuration. This embodiment also describes in detail the process performed by the DHCP device when the DHCP device senses that the OpenFlow device releases an address or becomes offline in the SDN.

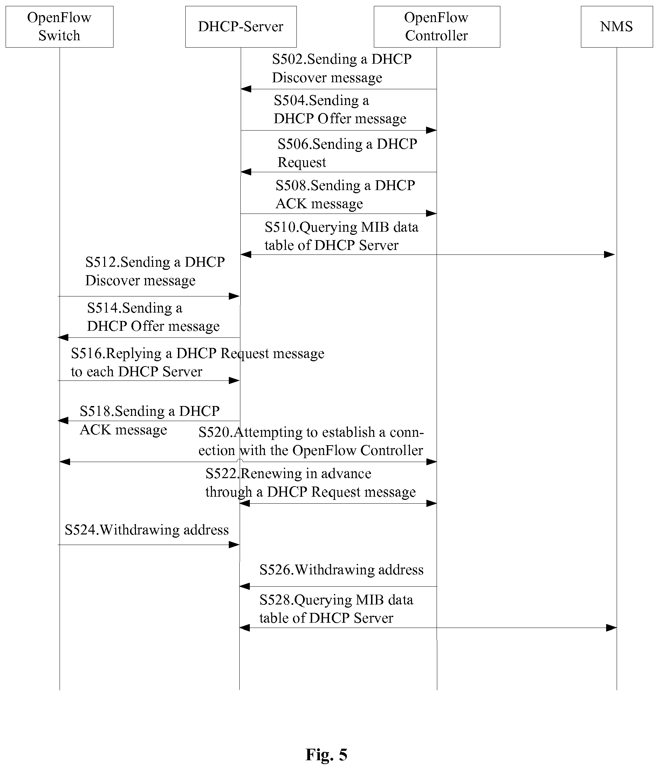

The detailed service flowchart can refer to Fig. 5.

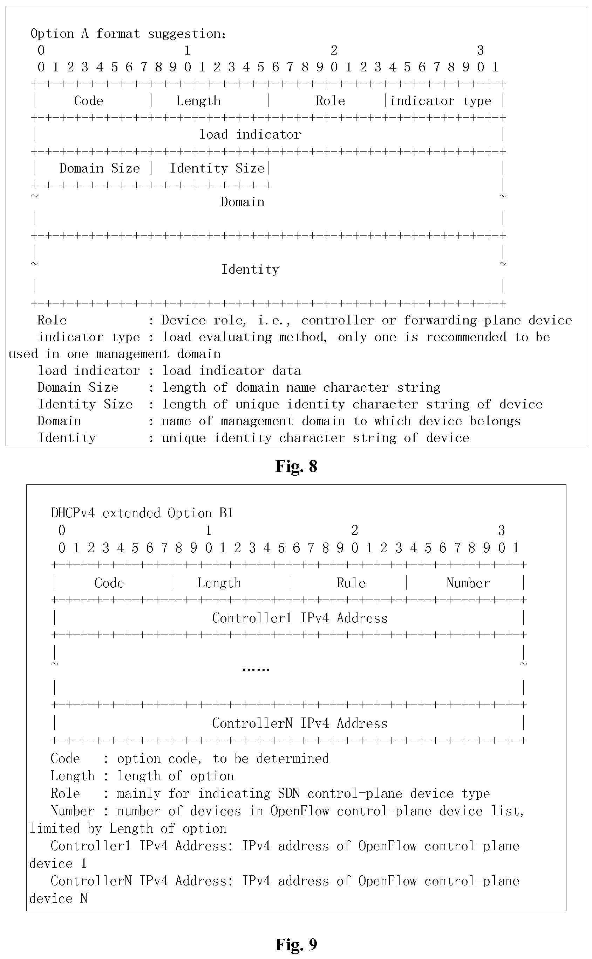

S502: after the OpenFlow Controller is started, the OpenFlow Controller sends a DHCP Discover message (which can carry an existing address) to the DHCP Server. In the DHCP Discover message sent by the OpenFlow Controller, device role, domain name and information of other fields are carried to the DHCP Server through an extended Option A. The format of the extended Option A may refer to Fig. 8, as an alternative, the DHCP Discover message might not carry the extended Option A and a DHCP Request carries the Option A.

S504: the DHCP Server establishes a DHCP user session, parses the extended Option A carried thereto by the OpenFlow Controller and temporarily stores the information on the DHCP Server. The DHCP Server sends a DHCP Offer message which carries an assigned IP address and other configuration information to the OpenFlow Controller.

S506: the OpenFlow Controller selects a proper address and sends a DHCP Request to the DHCP Server for confirmation; if the DHCP Discover message does not carry the Option A, the DHCP Request should carry the Option A to report the information of the OpenFlow Controller. It is suggested to carry the Option A in the DHCP Request message only.

S508: after the DHCP Server receives the DHCP Request, the DHCP Server parses the information in the Option A and meanwhile judges whether the DHCP Server address in the Option54 is the same as its own address; if the DHCP Server address in the Option54 is not the same as the address of the DHCP Server or the DHCP Request message times out, the DHCP Server deletes the device role, domain name and other information records of the OpenFlow Controller cached by the DHCP Server in S504 or in this step; if the DHCP Server address in the Option54 is the same as the address of the DHCP Server, the DHCP Server sends a DHCP ACK message to the OpenFlow Controller, and meanwhile writes the information of the OpenFlow Controller into the local MIB data table of the DHCP Server as one record.

S510: an NMS queries the MIB data table of the DHCP Server, and acquires the OpenFlow Controller information learned by the DHCP Server. There is no strict order for the execution of the current step and the steps described before and after this step. The DHCP Server is allowed to actively report, through a specific interface, OpenFlow Controller information learned by the DHCP server.

S512: the OpenFlow Switch sends a DHCP Discover message to the DHCP Server to apply for an IP address, or further sends a DHCP Discover message carrying an Option A to report its device information to the DHCP Server; however, it is not suggested to carry the Option A in this message.

S514: the DHCP Server sends a DHCP Offer message which contains an IP address and other configuration information to the OpenFlow Switch.

S516: the OpenFlow Switch broadcasts a DHCP Request message to all DHCP Servers for confirmation, wherein the DHCP Request message may carry an Option A to report the information of the OpenFlow Switch.

S518: after the DHCP Server receives the DHCP Request message from the OpenFlow Switch, the DHCP Server judges whether the DHCP Server IP address in Option54 is the same as its own address; if the DHCP Server IP address in Option54 is the same as its own address, the DHCP Server will send a DHCP ACK message that carries the IP address provided by the DHCP Server and other option information to the OpenFlow Switch. Meanwhile, the DHCP Server parses the Option A carried by the DHCP Request message, acquires the information of the OpenFlow Switch, saves the information to the local MIB data table of the DHCP Server as one record (it is optional to add the information of the OpenFlow Switch to the MIB data table), performs matching in the MIB data table according to the domain name of the OpenFlow Switch, sorts the matched information of OpenFlow Controllers according to a priority, and fills the sorted information of OpenFlow Controllers into the extended Option B to be carried to the OpenFlow Switch through the DHCP ACK message.

S520: after the OpenFlow Switch receives the DHCP ACK message from the DHCP Server, the OpenFlow Switch parses the extended Option B therein, and acquires from the Option B the addresses of the OpenFlow Controllers in the management domain to which the OpenFlow Switch belongs. The OpenFlow Switch actively attempts to establish a connection with the OpenFlow Controller.

S522: after a connection is successfully established between the OpenFlow Controller and the OpenFlow Switch, if the number of the OpenFlow Switches managed by the OpenFlow Controller changes, the OpenFlow Controller renews in advance through a DHCP Request message and updates the local MIB data table record of the DHCP Server by carrying an Option A in the DHCP Request message. Alternatively, a DHCP Inform message is also allowed to carry the Option A to achieve the same effect.

S524: when the OpenFlow Switch releases an IP address or fails to renew in time, the DHCP Server withdraws the address and deletes the record corresponding to the OpenFlow Switch in the local MIB data table.

S526: when the OpenFlow Controller releases an IP address or fails to renew in time, the DHCP Server withdraws the address and deletes the record corresponding to the OpenFlow Controller in the local MIB data table.

S528: the NMS queries the MIB data table of the DHCP Server, and acquires the OpenFlow Controller information learned by the DHCP Server; after learning that SDN devices such as OpenFlow Controller previously learned by the DHCP Server become invalid, the NMS deletes the corresponding record and synchronously updates the configuration transmitted to other DHCP devices. There is no strict order for the execution of the current step and the steps before and after this step. Similar to S510, the DHCP Server is allowed to actively report, through a specific interface, OpenFlow Controller information change learned by the DHCP server.

According to the list of OpenFlow Controller devices transmitted by the DHCP Server, the OpenFlow Switch will get OpenFlow Controllers with which connections can be established, wherein the OpenFlow Controllers may be learned by the DHCP Server locally, or may be acquired by the NMS from the DHCP Server of other network management domains, or may be those statically configured to the MIB data table by the DHCP Server locally.

### Embodiment 4

This embodiment mainly describes the process of an OpenFlow forwarding-plane device discovering an OpenFlow control-plane device through a DHCP Proxy and normally establishing a connection with the OpenFlow control-plane device in a scenario that the OpenFlow controller and the OpenFlow configuration point are not separated. For a convenient description, as one example only, this embodiment adopts the DHCPv4 protocol for the description of the dynamic discovery process. In this embodiment, the DHCP device is a DHCP Proxy, there is a DHCP Server in the background, the OpenFlow control-plane device is an OpenFlow Controller, and the OpenFlow forwarding-plane device is an OpenFlow Switch. In this embodiment, there is no separate OpenFlow Configuration Point device and the OpenFlow Controller performs the configuration. This embodiment no longer describes the process performed by the DHCP device when the OpenFlow device releases an address or becomes offline. Relative process can refer to the description in Embodiment 3.

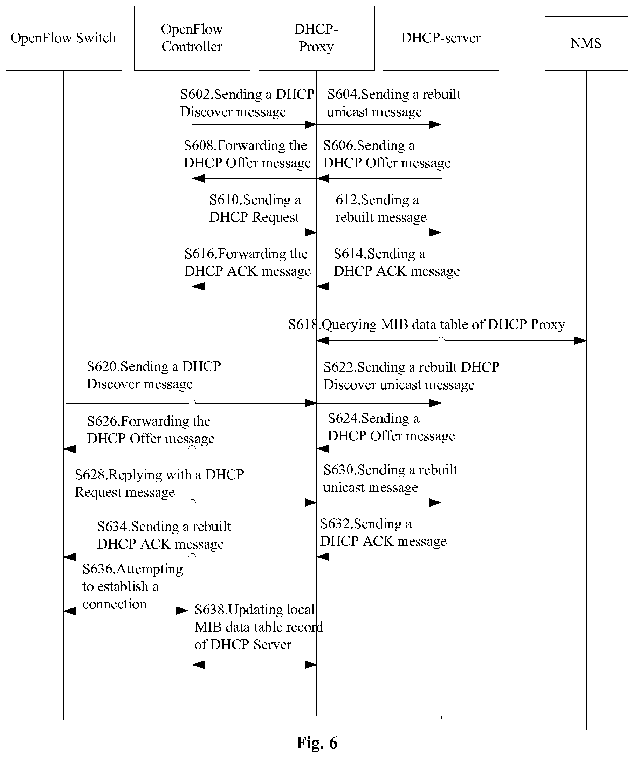

The detailed service flowchart of this embodiment can refer to Fig. 6.

S602: after the OpenFlow Controller is started, the OpenFlow Controller sends a DHCP Discover message (which can carry an existing address) to the DHCP Proxy. In the DHCP Discover message sent by the OpenFlow Controller, device role, domain name and information of other fields are carried to the DHCP Proxy through an extended Option A. The format of the extended Option A may refer to Fig. 8, as an alternative, the DHCP Discover message might not carry the extended Option A and a DHCP Request carries the Option A.

S604: after the DHCP Proxy that supports the function of learning and managing SDN network device information receives the DHCP Discover message, the DHCP Proxy establishes a DHCP user session, intercepts the extended Option A carried in the DHCP Discover message, rebuilds a DHCP Discover unicast message and sends the DHCP Discover unicast message to a DHCP Server represented by the DHCP Proxy.

S606: the DHCP Server establishes a DHCP user session, sends a DHCP Offer message which carries an assigned IP address and other configuration information to the DHCO Proxy, which then forwards the message to the OpenFlow Controller.

S608: the DHCP Proxy forwards the received DHCP Offer message to the OpenFlow Controller.

S610: the OpenFlow Controller selects a proper address and sends a DHCP Request to the DHCP Proxy for confirmation; if the DHCP Discover message does not carry the Option A, the DHCP Request should carry the Option A to report the information of the OpenFlow Controller. It is suggested to carry the Option A in the DHCP Request message only.

S612: after the DHCP Proxy receives the DHCP Request message, the DHCP Proxy intercepts and parses the information in the Option A and meanwhile judges whether the DHCP Server address in the Option54 is the same as the address of the DHCP Server represented by the DHCP Proxy; if the DHCP Server address in the Option54 is not the same as the address of the DHCP Server or the DHCP Request message times out, the DHCP Proxy deletes the device role, domain name and other information records of the OpenFlow Controller cached in S604 or in this step; if the DHCP Server address in the Option54 is the same as the address of the DHCP Server, the DHCP Proxy rebuilds a DHCP Request unicast message without Option A and sends the DHCP Request unicast message to the DHCP Server.

S614: after the DHCP Server receives the DHCP Request, the DHCP Server judges whether the DHCP Server IP address in Option54 is the same as its own address; if the DHCP Server IP address in Option54 is the same as its own address, the DHCP Server sends a DHCP ACK message to the DHCP Proxy which then forwards the DHCP ACK message to the OpenFlow Controller.

S616: after the DHCP Proxy receives the DHCP ACK message, the DHCP Proxy writes the information of the OpenFlow Controller into the local MIB data table of the DHCP Proxy as one record, and meanwhile sends the message to the OpenFlow Controller.

S618: an NMS queries the MIB data table of the DHCP Proxy, and acquires the OpenFlow Controller information learned by the DHCP Proxy. There is no strict order for the execution of the current step and the steps before and after this step. The DHCP Proxy is also allowed to actively report, through a specific interface, OpenFlow Controller information learned by the DHCP proxy.

S620: the OpenFlow Switch sends a DHCP Discover message to the DHCP Proxy to apply for an IP address from the DHCP Server; the OpenFlow Switch may carry an Option A in this message to report its device information; however, it is not suggested to carry the Option A in the DHCP Discover message.

S622: after the DHCP Proxy receives the DHCP Discover message, the DHCP Proxy intercepts the Option A, establishes a DHCP session, rebuilds a DHCP Discover unicast message and sends the DHCP Discover unicast message to the DHCP Server represented by the DHCP Proxy.

S624: the DHCP Server sends a DHCP Offer message which contains an IP address and other configuration information to the DHCP Proxy, which then forwards the DHCP Offer message to the OpenFlow Switch.

S626: the DHCP Proxy forwards the received DHCP Offer message to the OpenFlow Switch.

S628: the OpenFlow Switch replies, in a broadcast manner, the DHCP proxy with a DHCP Request message for confirmation, wherein the DHCP Request message may carry an Option A to report the information of the OpenFlow Switch.

S630: after the DHCP Proxy receives the DHCP Request message from the OpenFlow Switch, the DHCP Proxy judges whether the DHCP Server IP address in Option54 is the same as the address of the DHCP Server represented by the DHCP Proxy; if the DHCP Server IP address in Option54 is the same as the address of the DHCP Server, the DHCP Proxy parses the Option A carried by the DHCP Request message to acquire the OpenFlow Switch information and saves the OpenFlow Switch information. The DHCP Proxy rebuilds a DHCP Request unicast message without Option A and sends the DHCP Request unicast message to the DHCP Server.

S632: after the DHCP Server receives the DHCP Request message forwarded by the DHCP Proxy, the DHCP Server judges whether the DHCP Server IP address in Option54 is the same as its own address; if the DHCP Server IP address in Option54 is the same as its own address, the DHCP Server sends to the DHCP Proxy a DHCP ACK message that carries the IP address provided by the DHCP Server and other option information, then the DHCP Proxy forwards the DHCP ACK message to the OpenFlow Switch.

S634: after the DHCP Proxy receives the DHCP ACK message, the DHCP Proxy saves the OpenFlow Switch information saved locally previously to the local MIB data table of the DHCP Proxy as one record (it is optional to add the OpenFlow Switch information to the MIB data table), performs matching in the MIB data table according to the domain name of the OpenFlow Switch, sorts the matched information of OpenFlow Controllers according to a priority, and fills the sorted information of OpenFlow Controllers into the extended Option B; then the DHCP Proxy rebuilds a DHCP ACK message that carries the extended Option B and sends the DHCP ACK message to the OpenFlow Switch.

S636: after the OpenFlow Switch receives the DHCP ACK message from the DHCP Server, the OpenFlow Switch parses the extended Option B, and acquires from the Option B the addresses of OpenFlow Controllers in the management domain to which the OpenFlow Switch belongs. The OpenFlow Switch actively attempts to establish a connection with the OpenFlow Controller.

S638: after a connection is successfully established between the OpenFlow Controller and the OpenFlow Switch, if there is a change in the number of OpenFlow Switches managed by the OpenFlow Controller, the OpenFlow Controller renews in advance through a DHCP Request message and updates the local MIB data table record of the DHCP Server by carrying an Option A in the DHCP Request message. Alternatively, a DHCP Inform message is also allowed to carry the Option A to achieve the same effect.

### Embodiment 5

This embodiment mainly describes the process of an OpenFlow forwarding-plane device discovering an OpenFlow control-plane device through a DHCP Server and normally establishing a connection with the OpenFlow control-plane device in a scenario that the OpenFlow controller and the OpenFlow configuration point are separated. For a convenient description, as one example only, this embodiment adopts the DHCPv4 protocol for the description of the dynamic discovery process. In this embodiment, the DHCP device is a DHCP Server; the OpenFlow control-plane device is an OpenFlow Controller and an OpenFlow Configuration Point, wherein the OpenFlow Configuration Point is configured with the information of the OpenFlow Controller; and the OpenFlow forwarding-plane device is an OpenFlow Switch. This embodiment no longer describes the process performed by the DHCP device when the OpenFlow device releases an address or becomes offline. Relative process can refer to the description in Embodiment 3.

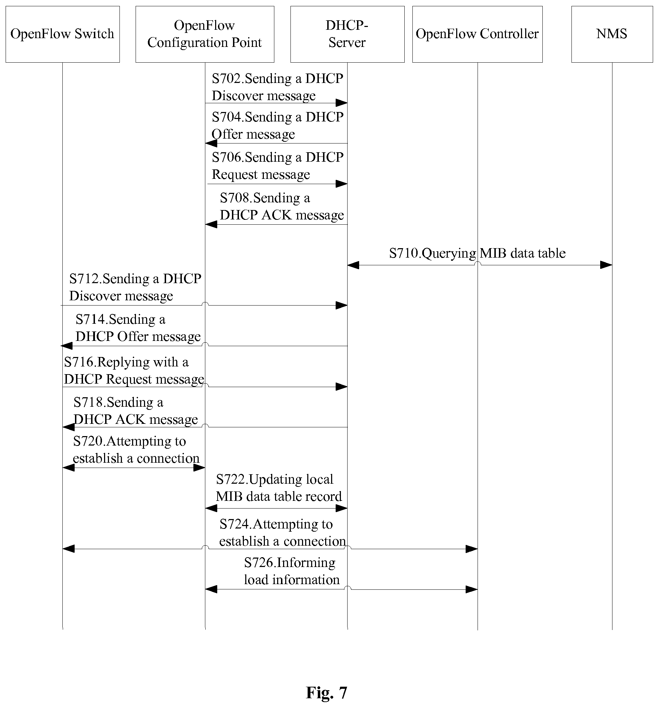

The detailed service flowchart of this embodiment can refer to Fig. 7.

S702: after the OpenFlow Configuration Point is started, the OpenFlow Configuration Point sends a DHCP Discover message (which may carry an existing address) to the DHCP Server. In the DHCP Discover message sent by the OpenFlow Configuration point, device role, domain name and information of other fields are carried to the DHCP Server through an extended Option A. The format of the extended Option A may refer to Fig. 8, wherein the DHCP Discover message might not carry the extended Option A and a DHCP Request carries the Option A.

S704: the DHCP Server establishes a DHCP user session, parses the extended Option A sent thereto by the OpenFlow Configuration Point and temporarily stores the information on the DHCP Server. The DHCP Server sends a DHCP Offer message which carries an assigned IP address and other configuration information to the OpenFlow Configuration Point.

S706: the OpenFlow Configuration Point selects a proper address and sends a DHCP Request to the DHCP Server for confirmation; if the DHCP Discover message does not carry the Option A, the DHCP Request should carry the Option A to report the information of the OpenFlow Configuration Point. It is suggested to carry the Option A in the DHCP Request message only.

S708: after the DHCP Server receives the DHCP Request, the DHCP Server parses the information in the Option A and meanwhile judges whether the DHCP Server address in the Option54 is the same as its own address; if the DHCP Server address in the Option54 is not the same as its own address or the DHCP Request message times out, the DHCP Server deletes the device role, domain name and other information records of the OpenFlow Configuration Point cached by the DHCP Server in S704 or in this step; if the DHCP Server address in the Option54 is the same as its own address, the DHCP Server sends a DHCP ACK message to the OpenFlow Configuration point, and meanwhile writes the information of the OpenFlow Configuration Point into the local MIB data table of the DHCP Server as one record.

S710: an NMS queries the MIB data table of the DHCP Server, and acquires the OpenFlow Configuration Point information learned by the DHCP Server. There is no strict order for the execution of this step and the steps described before and after this step. The DHCP Server is allowed to actively report, through a specific interface, OpenFlow Configuration Point information learned by the DHCP server.

S712: the OpenFlow Switch sends a DHCP Discover message to the DHCP Server to apply for an IP address, or further sends a DHCP Discover message carrying an Option A to report its device information to the DHCP Server; however, it is not suggested to carry the Option A in this message.

S714: the DHCP Server sends a DHCP Offer message which contains an IP address and other configuration information to the OpenFlow Switch.

S716: the OpenFlow Switch broadcasts a DHCP Request message to all DHCP Servers for confirmation, wherein the DHCP Request message may carry an Option A to report the information of the OpenFlow Switch.

S718: after the DHCP Server receives the DHCP Request message from the OpenFlow Switch, the DHCP Server judges whether the DHCP Server IP address in Option54 is the same as its own address; if the DHCP Server IP address in Option54 is the same as its own address, the DHCP Server will send a DHCP ACK message that carries the IP address provided by the DHCP Server and other option information to the OpenFlow Switch; meanwhile, the DHCP Server parses the Option A carried by the DHCP Request message, acquires the information of the OpenFlow Switch, saves the information to the local MIB data table of the DHCP Server as one record (it is optional to add the information of the OpenFlow Switch to the MIB data table), performs matching in the MIB data table according to the domain name of the OpenFlow Switch, sorts the information of the matched OpenFlow Configuration Point devices according to a priority, fills the sorted information of the OpenFlow Configuration Points into the extended Option B to be carried to the OpenFlow Switch through the DHCP ACK message.

S720: after the OpenFlow Switch receives the DHCP ACK message from the DHCP Server, the OpenFlow Switch parses the extended Option B therein, and acquires from the Option B the addresses of the OpenFlow Configuration Points in the management domain to which the OpenFlow Switch belongs. The OpenFlow Switch actively attempts to establish a connection with an OpenFlow Configuration Point; after the connection is established, the OpenFlow Configuration point configures the OpenFlow Switch and informs the OpenFlow Switch of the address of the OpenFlow Controller.

S722: after a connection is successfully established between the OpenFlow Configuration Point and the OpenFlow Switch, if the number of the OpenFlow Switches managed by the OpenFlow Configuration Point changes, the OpenFlow Configuration Point renews in advance through a DHCP Request message and updates the local MIB data table record of the DHCP Server by carrying an Option A in the DHCP Request message. Alternatively, a DHCP Inform message is also allowed to carry the Option A to achieve the same effect.

S724: after the OpenFlow Switch acquires the address of the OpenFlow Controller, the OpenFlow Switch attempts to establish a connection with the OpenFlow Controller. There is no strict order for the execution of this step and S722.

S726: after a connection is established between the OpenFlow Controller and the OpenFlow Switch, the OpenFlow Controller may inform its load information to the OpenFlow Configuration Point through a specific interface, so that the OpenFlow Configuration Point, when managing multiple OpenFlow Controllers, can adjust, according to a certain policy, the specific OpenFlow Controller with which the OpenFlow Switch selects to establish a connection, thereby realizing the load balancing of the SDN basic network control flow. This step is optional, not forced to be executed.

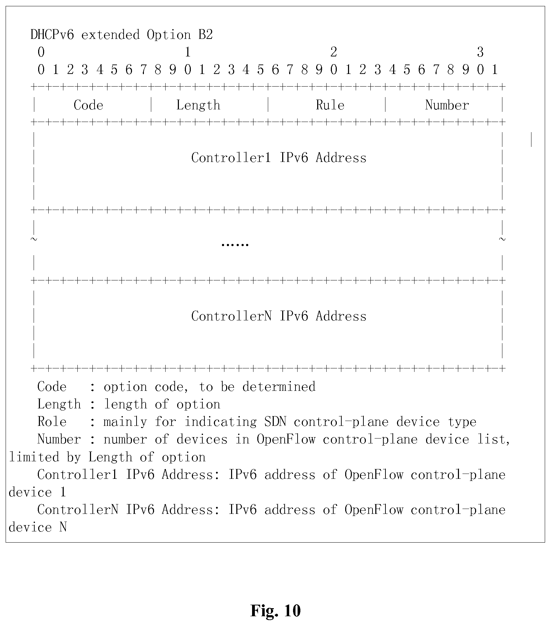

In the DHCP ACK message responded by the DHCP device to the OpenFlow forwarding-plane device, the Option B1 carried therein informs the information list of the OpenFlow control-plane devices to the OpenFlow forwarding-plane device. The format of the Option B1 may refer to Fig. 9. If the currently adopted protocol is a DHCPv6 protocol, it is suggested to carry in a DHCPv6 Reply message an extended Option B2 for transmitting the information list of the OpenFlow control-plane devices. The format of the Option B2 may refer to Fig. 10.

The above embodiments of the present disclosure are common to the scenarios of the SDN forwarding-plane devices (including all forwarding-plane devices supporting SDN south interface protocols such as OpenFlow, for example, AP, switch and router) discovering SDN controllers.

In another embodiment, software is provided, which is configured to perform the technical scheme described in the above embodiments and example embodiments.

In another embodiment, a storage medium is provided, in which the above software is stored; the storage medium includes but not limited to: compact disc, floppy disk, hard disk, erasable memory and so on.

Obviously, those skilled in the art should understand that the components or steps described above can be implemented by a common computer device; the components or steps can be integrated on a single computing device or distributed on a network composed of a plurality of computing devices; optionally, the components or steps can be implemented by a programming code executable by a computing device, thus they can be stored in a storage device to be executed by a computing device and executed in a different order in some cases, or manufactured into individual integrated circuit module respectively, or several of them can be manufactured into a single integrated circuit module to implement; in this way, the present disclosure is not limited to any combination of specific hardware and software.

The above are only the example embodiments of the present disclosure and are not intended to limit the scope of protection of the present disclosure. Any modification, equivalent substitute and improvement made within the principle of the present disclosure are deemed to be included within the scope of protection defined by the claims of the present disclosure.

### Industrial Applicability

The technical scheme provided in the embodiments of the present disclosure can be applied to the discovering process of control-plane devices. In the embodiments of the present disclosure, the information of at least one control-plane device is obtained by performing matching according to the identification information of a forwarding-plane device and the information of the at least one control-plane device is sent to the forwarding-plane device, thus, the technical solution solves the technical problem in related art that a forwarding-plane device cannot discover a control-plane device automatically and effectively, and thus enables the forwarding-plane device to automatically discover the control-plane device and further perform auto-adaptive adjustment for the control-plane device.

## Claims

1. A method for discovering an OpenFlow protocol-based control-plane device, comprising:
receiving identification information from an OpenFlow protocol-based forwarding-plane device, wherein the identification information is identification information of the forwarding-plane device, and the identification information corresponds to information of at least one control-plane device stored in a Management Information Base, MIB (S102);
performing matching in the MIB according to the identification information to obtain the information of the at least one control-plane device (S104); and
sending the information of the at least one control-plane device to the forwarding-plane device (SI06).

2. The method as claimed in claim 1, wherein before receiving the identification information, the method further comprises:
acquiring information of each control-plane device in a specified domain after domain partitioning is conducted in advance in a Software Defined Network, SDN;
storing the information of each control-plane device in the specified domain into the MIB.

3. The method as claimed in claim 2, wherein the identification information comprises: domain name information of the specified domain to which the forwarding-plane device belongs.

4. The method as claimed in any one of claims 1 to 3, wherein the method applies to a Dynamic Host Configuration Protocol, DHCP, device in an SDN.

5. The method as claimed in claim 4, wherein sending the information of the at least one control-plane device to the forwarding-plane device comprises:
sending the information of the at least one control-plane device to the forwarding-plane device through a specified field in a DHCP message.

6. The method as claimed in claim 5, wherein the specified field comprises: an Option field.

7. The method as claimed in claim 3, wherein when receiving identification information from the OpenFlow protocol-based forwarding-plane device, the method further comprises:
receiving a request message from the forwarding-plane device, wherein the request message is used for requesting a DHCP device to assign an address to the forwarding-plane device.

8. The method as claimed in claim 4, further comprising:
receiving a query request message from a Network Management System, NMS;
upon trigger of the query request message, sending, through the NMS, information of control-plane devices stored in the MIB to DHCP devices other than the DHCP device in the SDN.

9. An apparatus for discovering an OpenFlow protocol-based control-plane device, comprising:
a receiving component (20), which is configured to receive identification information from an OpenFlow protocol-based forwarding-plane device, wherein the identification information is identification information of the forwarding-plane device, and the identification information corresponds to information of at least one control-plane device stored in a Management Information Base, MIB;
a matching component (22), which is configured to perform matching in the MIB according to the identification information to obtain the information of the at least one control-plane device; and
a sending component (24), which is configured to send the information of the at least one control-plane device to the forwarding-plane device.

10. The apparatus as claimed in claim 9, comprising:
an acquisition component (26), which is configured to acquire information of each control-plane device in a specified domain after domain partitioning is conducted in advance in a Software Defined Network, SDN; and
a storage component (28), which is configured to store the information of each control-plane device in the specified domain into the MIB.

## Patentansprüche

1. Verfahren zum Entdecken einer OpenFlow-Protokoll basierten Steuerungsebenenvorrichtung, umfassend:
Empfangen von Identifikationsinformationen einer OpenFlow-Protokoll basierten Weiterleitungsebenenvorrichtung, wobei die Identifikationsinformationen Identifikationsinformationen der Weiterleitungsebenenvorrichtung sind, und die Identifikationsinformationen Informationen mindestens einer Steuerungsebenenvorrichtung entsprechen, die in einer Management Information Base, MIB, gespeichert ist (S102) ;
Durchführen einer Anpassung in der MIB gemäß den Identifikationsinformationen, um die Informationen der mindestens einen Steuerungsebenenvorrichtung zu erhalten (S104); und
Senden der Informationen der mindestens einen Steuerungsebenenvorrichtung zu der Weiterleitungsebenenvorrichtung (S106).

2. Verfahren nach Anspruch 1, wobei das Verfahren vor dem Empfangen der Identifikationsinformationen weiter umfasst:
Erfassen von Informationen jeder Steuerungsebenenvorrichtung in einer bestimmten Domäne, nachdem vorab Domänenpartitionierung in einem Software Defined Network, SDN, durchgeführt worden ist;
Speichern der Informationen jeder Steuerungsebenenvorrichtung in der bestimmten Domäne in die MIB.

3. Verfahren nach Anspruch 2, wobei die Identifikationsinformationen umfassen: Domänennameninformationen der bestimmten Domäne, der die Weiterleitungsebenenvorrichtung angehört.

4. Verfahren nach einem der Ansprüche 1 bis 3, wobei das Verfahren auf eine Dynamic Host Configuration Protocol, DHCP-Vorrichtung in einem SDN angewendet wird.

5. Verfahren nach Anspruch 4, wobei Senden der Informationen der mindestens einen Steuerungsebenenvorrichtung zu der Weiterleitungsebenenvorrichtung umfasst:
Senden der Informationen der mindestens einen Steuerungsebenenvorrichtung zu der Weiterleitungsebenenvorrichtung durch ein bestimmtes Feld in einer DHCP-Nachricht.

6. Verfahren nach Anspruch 5, wobei das bestimmte Feld umfasst: ein Optionsfeld.

7. Verfahren nach Anspruch 3, wobei das Verfahren beim Empfangen von Identifikationsinformationen von der OpenFlow-Protokoll basierten Weiterleitungsebenenvorrichtung weiter umfasst:
Empfangen einer Antragsnachricht von der Weiterleitungsebenenvorrichtung, wobei die Antragsnachricht verwendet wird, um bei einer DHCP-Vorrichtung zu beantragen, der Weiterleitungsebenenvorrichtung eine Adresse zuzuweisen.

8. Verfahren nach Anspruch 4, weiter umfassend:
Empfangen einer Abfrage-Antragsnachricht von einem Network Management System, NMS;
beim Auslösen der Abfrage-Antragsnachricht, Senden von in der MIB gespeicherten Informationen der Steuerungsebenenvorrichtungen durch das NMS an die anderen DHCP-Vorrichtungen, als die DHCP-Vorrichtung in dem SDN.

9. Gerät zum Entdecken einer OpenFlow-Protokoll basierten Steuerungsebenenvorrichtung, umfassend:
eine Empfangskomponente (20), die konfiguriert ist, um Identifikationsinformationen von einer OpenFlow-Protokoll basierten Weiterleitungsebenenvorrichtung zu empfangen, wobei die Identifikationsinformationen Identifikationsinformationen der Weiterleitungsebenenvorrichtung sind, und die Identifikationsinformationen Informationen von mindestens einer Steuerungsebenenvorrichtung entsprechen, die in einer Management Information Base, MIB, gespeichert sind;
eine Anpassungskomponente (22), die konfiguriert ist, um eine Anpassung in der MIB gemäß den Identifikationsinformationen durchzuführen, um die Informationen von der mindestens einen Steuerungsebenenvorrichtung zu erhalten; und
eine Sendekomponente (24), die konfiguriert ist, um die Informationen der mindestens einen Steuerungsebenenvorrichtung zu der Weiterleitungsebenenvorrichtung zu senden.

10. Gerät nach Anspruch 9, umfassend:
eine Erfassungskomponente (26), die konfiguriert ist, um Informationen von jeder Steuerungsebenenvorrichtung in einer bestimmten Domäne zu erfassen, nachdem eine Domänenpartitionierung vorab in einem Software Defined Network, SDN, durchgeführt worden ist; und
eine Speicherkomponente (28), die konfiguriert ist, um die Informationen jeder Steuerungsebenenvorrichtung in der bestimmten Domäne in die MIB zu speichern.

## Revendications

1. Procédé de découverte d'un dispositif de plan de commande basé sur protocole OpenFlow, comprenant :
la réception d'informations d'identification en provenance d'un dispositif de plan de transfert basé sur protocole OpenFlow, dans lequel les informations d'identification sont des informations d'identification du dispositif de plan de transfert, et les informations d'identification correspondent à des informations d'au moins un dispositif de plan de commande stockées dans une base d'informations de gestion, MIB, (S102) ;
l'exécution d'une mise en correspondance dans la MIB en fonction des informations d'identification pour obtenir les informations de l'au moins un dispositif de plan de commande (S104) ; et
l'envoi des informations de l'au moins un dispositif de plan de commande au dispositif de plan de transfert (S106).

2. Procédé selon la revendication 1, dans lequel, avant la réception des informations d'identification, le procédé comprend en outre :
l'acquisition d'informations de chaque dispositif de plan de commande dans un domaine spécifié après l'exécution à l'avance d'un partitionnement de domaine dans un réseau défini par logiciel, SDN ;
le stockage des informations de chaque dispositif de plan de commande dans le domaine spécifié dans la MIB.

3. Procédé selon la revendication 2, dans lequel les informations d'identification comprennent : des informations de nom de domaine du domaine spécifié auquel le dispositif de plan de transfert appartient.

4. Procédé selon l'une quelconque des revendications 1 à 3, dans lequel le procédé s'applique à un dispositif de protocole de configuration d'hôte dynamique, DHCP, dans un SDN.

5. Procédé selon la revendication 4, dans lequel l'envoi des informations de l'au moins un dispositif de plan de commande au dispositif de plan de transfert comprend :
l'envoi des informations de l'au moins un dispositif de plan de commande au dispositif de plan de transfert à travers un champ spécifié dans un message DHCP.

6. Procédé selon la revendication 5, dans lequel le champ spécifié comprend : un champ Option.

7. Procédé selon la revendication 3, dans lequel, lors de la réception d'informations d'identification en provenance du dispositif de plan de transfert basé sur protocole OpenFlow, le procédé comprend en outre :
la réception d'un message de demande en provenance du dispositif de plan de transfert, dans lequel le message de demande est utilisé pour demander à un dispositif DHCP d'assigner une adresse au dispositif de plan de transfert.

8. Procédé selon la revendication 4, comprenant en outre :
la réception d'un message de demande d'interrogation en provenance d'un système de gestion de réseau, NMS ;
au déclenchement du message de demande d'interrogation, l'envoi, à travers le NMS, d'informations de dispositifs de plan de commande stockées dans la MIB à des dispositifs DHCP autres que le dispositif DHCP dans le SDN.

9. Appareil de découverte d'un dispositif de plan de commande basé sur protocole OpenFlow, comprenant :
un composant de réception (20), qui est configuré pour la réception d'informations d'identification en provenance d'un dispositif de plan de transfert basé sur protocole OpenFlow, dans lequel les informations d'identification sont des informations d'identification du dispositif de plan de transfert, et les informations d'identification correspondent à des informations d'au moins un dispositif de plan de commande stockées dans une base d'informations de gestion, MIB ;
un composant de mise en correspondance (22), qui est configuré pour l'exécution d'une mise en correspondance dans la MIB en fonction des informations d'identification pour obtenir les informations de l'au moins un dispositif de plan de commande ; et
un composant d'envoi (24), qui est configuré pour l'envoi des informations de l'au moins un dispositif de plan de commande au dispositif de plan de transfert.

10. Appareil selon la revendication 9, comprenant :
un composant d'acquisition (26), qui est configuré pour l'acquisition d'informations de chaque dispositif de plan de commande dans un domaine spécifié après l'exécution à l'avance d'un partitionnement de domaine dans un réseau défini par logiciel, SDN ; et
un composant de stockage (28), qui est configuré pour le stockage des informations de chaque dispositif de plan de commande dans le domaine spécifié dans la MIB.
